# EUROPÄISCHE PATENTSCHRIFT

(11) **EP 3 597 049 B1**
(45) Veröffentlichungstag und Bekanntmachung des Hinweises auf die Patenterteilung: **15.02.2023**
(21) Anmeldenummer: 18184713.8
(22) Anmeldetag: 20.07.2018
(51) Int. Cl.: A23L 2/38, A23L 2/40, A23L 2/60, A23L 27/00, A23L 2/52

(54) **GESÜSSTES GETRÄNK ENTHALTEND MINERALSTOFFREICHES WASSER SOWIE VERWENDUNG VON MINERALSTOFFREICHEM WASSER FÜR DIE HERSTELLUNG VON GESÜSSTEN GETRÄNKEN**
SWEETENED BEVERAGE CONTAINING MINERAL-RICH WATER AND USE OF MINERAL-RICH WATER FOR THE PRODUCTION OF SWEETENED BEVERAGES
BOISSONS SUCRÉES CONTENANT DE L'EAU RICHE EN MINÉRAUX AINSI QU'UTILISATION DE L'EAU RICHE EN MINÉRAUX POUR LA FABRICATION DE BOISSONS SUCRÉES

(43) Veröffentlichungstag der Anmeldung: 22.01.2020
(73) Patentinhaber: Red Bull GmbH, 5330 Fuschl am See (AT)
(72) Erfinder: Nachbagauer, Josef, 5330 Fuschl am See (AT); Urban-Klik, Manfred, 5330 Fuschl am See (AT); Concin, Roland, 5330 Fuschl am See (AT)
(74) Vertreter: Metten, Karl-Heinz

(56) Entgegenhaltungen:
- EP-A2- 0 141 250
- US-A1- 2015 223 510
- Anonymus: "Zitronenlimonade mit Zitronenmelisse und Rohrzucker", CHEFKOCH.DE , 29. September 2014 (2014-09-29), XP002787747, Gefunden im Internet: URL:https://www.chefkoch.de/rezepte/259204 1406999868/Zitronenlimonade-mit-Zitronenme lisse-und-Rohrzucker.html [gefunden am 2019-01-09]
- WANG AILI ET AL: "Effect of iron on taste perception and emotional response of sweetened beverage under different water conditions", FOOD QUALITY AND PREFERENCE, LONGMAN SCIENTIFIC AND TECHNICAL, HARLOW, GB, Bd. 54, 7. Juli 2016 (2016-07-07), Seiten 58-66, XP029683262, ISSN: 0950-3293, DOI: 10.1016/J.FOODQUAL.2016.06.016
- Bayard Media GmbH & Co. KG: "Deutschlands beste Mineralwässer - Die Wasserliste", plus Magazin , 26. Juli 2013 (2013-07-26), XP002787748, Gefunden im Internet: URL:https://www.plus-magazin.com/wp-conten tnew/uploads/2013/07/Wasser-Liste.pdf [gefunden am 2019-01-09]

## Beschreibung

Die vorliegende Erfindung betrifft gesüßte Getränke enthaltend mineralstoffreiches Wasser sowie die Verwendung von mineralstoffreichem Wasser für die Herstellung von gesüßten Getränken.

Erfrischungsgetränke sind zwecks Erhalts eines abgerundeten Geschmacksprofils regelmäßig in nicht geringen Mengen mit Saccharose versetzt. Derartige Erfrischungsgetränke verfügen häufig über einen relativ hohen Kaloriengehalt. Dieser liegt bei Softdrinks bislang üblicherweise im Bereich von 3.6 to 3.9 keal/g.

Seit langem werden unterschiedlichste Ansätze propagiert, um bei jeglicher Art von Getränken mit kalorienärmeren Süßungsmitteln einen angenehmen Süßegrad zu erhalten.

Ein Ansatz zur Reduktion der für den Erhalt eines gewünschten Süßegrads erforderlichen Menge an Saccharose besteht darin, sogenannte Geschmacksverstärker einzusetzen. In der EP 1 977 655 B1 werden Aromakompositionen von Alkamiden wie Pellitorinen und Spilanthol und Hesperetin oder 4-Hydroxydihydrochalkonen zur Verstärkung des süßen Geschmacks süß schmeckender Stoffe vorgeschlagen. Mit diesen Aromakompositionen soll es gelingen, den süßen Anfangsgeschmack zu verstärken.

Ein anderer Ansatz besteht darin, Saccharose durch artifizielle Süßungsmittel wie Aspartam, Neotam, Alitam, Glucin, Acesulfam-Kalium, Cyclamat oder Saccharin, die strukturell keine Ähnlichkeit mit Saccharose haben, zu ersetzen. Alternativ wird auch auf Süßungsmittel zurückgegriffen, die sich wie Sucralose strukturell von Glucose oder Saccharose ableiten. In den letzten Jahren ist zudem versucht worden, die erhebliche Süßkraft von aus Blättern der Stevia-Pflanze erhältlichen Steviolglycosiden als Saccharose-Ersatz zu nutzen. Nachteilig an Steviolglycosiden ist jedoch neben einer verzögerten Generierung des süßen Geschmackseindrucks ihr bitterer bzw. lakritzartiger Nachgeschmack. Auch wird mit bestimmten Mischungen an Steviolglycosiden mitunter ein metallischer Nachgeschmack erhalten. Diesen Nachteilen wird auf vielfältige Weise versucht entgegenzuwirken, beispielsweise durch Verwendung von fein aufeinander abgestimmten Zusammensetzungen an unterschiedlichen Steviolglycosiden, wie in der WO 2016/062 859 A1 beschrieben, oder durch Beimengung von geschmacksmodifizierenden Verbindungen (s.a. EP 2 253 226 B1). Der bittere Nachgeschmack von Steviolglycosiden soll sich gemäß der WO 2012/073121 A2 durch Eliminierung der Steviolglycoside Rebaudiosid C und Dulcosid A aus den eingesetzten Steviolglycosidextrakten verringern lassen, gemäß der EP 2 474 240 A1 durch den Einsatz von Rebaudiosid D, Milchsäure und Weinsäure. In der WO 2011/ 146463 A2 wird vorgeschlagen, den bitteren Nachgeschmack von Steviolglycosiden durch Verwendung gesteigerter Mengen an Rebaudioside D zu maskieren.

Mit den vorangehend genannten kalorienarmen Süßungsmitteln wird regelmäßig nicht das abgerundete Geschmacksprofil erhalten, das sich bei Verwendung von Saccharose einstellt. Ein Geschmackseindruck, wie er sich mit Saccharose bei Getränken ergibt, soll sich gemäß der WO 2008/ 147726 durch Verwendung einer Zusammensetzung erhalten lassen, die zurückgreift auf i) Harnstoff oder Thioharnstoff als Süßevertärker, ii) ein artifizielles Sü-βungsmittel wie Aspartam oder Sucralose oder auf Stevia-Verbindungen und iii) das Süßeprofil verbessernde Verbindungen, z.B. Polyole oder Aminosäuren.

Die EP 141 250 A2 befasst sich mit einem Getränk mit einem Magnesium-Gehalt größer 144 mg/L und einem Calcium-Gehalt, der in Mol-Anteilen weniger als 1% der Magnesium-Konzentration beträgt. Mit Hilfe dieses Getränks soll der Calcium/Magnesium-Quotient in der Ernährung verbessert werden können. Untersuchungen zum Einfluss des Mineralstoffgehaltes und Härtegrades von Wasser auf die Süßwahrnehmung von Saccharose von Wang et al. 2016 zeigte zwar einen Einfluss durch den Eisengehalt, jedoch keinen Effekt durch den jeweiligen Härtegrad des Wassers (Wang, A. et al., Effect of iron on taste perception and emotional response of sweetened beverage under different water conditions, Food Quality and Preference, Vol. 54, 2016, p. 58-66).

Es wäre wünschenswert, auf gesüßte Getränke zurückgreifen zu können, die nicht mehr mit den Nachteilen des Stands der Technik behaftet sind. Der vorliegenden Erfindung lag daher die Aufgabe zugrunde, gesüßte Getränke zur Verfügung zu stellen, die trotz Verwendung eines reduzierten Gehalts an Saccharose einen Süßegrad aufweisen, der sich von herkömmlichen, mit größeren Mengen an Saccharose gesüßten Getränken nicht unterscheidet. Bevorzugt lag der vorliegenden Erfindung die Aufgabe zugrunde, solche gesüßten Getränke verfügbar zu machen, die sich in ihrem Süßegrad nicht von herkömmlichen, mit größeren Mengen an Saccharose gesüßten Getränken unterscheiden und die darüber hinaus ein abgerundetes Geschmacksprofil aufweisen, wie es sich regelmäßig bei Süßung von Getränken mit ausschließlich Saccharose einstellt.

Demgemäß wurde ein gesüßtes Getränk mit einem Süßegrad gefunden, hergestellt mit mineralstoffreichem Wasser, wobei mineralstoffreiches Wasser solches Wasser ist, bei dem der als fester Rückstand berechnete Mineralstoffgehalt dieses mineralstoffreichen Wassers mehr als 1.000 mg/l gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272), beträgt, und einem oder mehreren natürlichen Süßstoffen, enthaltend oder bestehend aus Saccharose, wobei das mineralstoffreiche Wasser oder das Getränk über eine Gesamthärte °dH von mindestens 35 verfügt, ermittelt gemäß Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol der Kationen von Erdalkalimetallen je Liter.

Bevorzugt sind dabei solche gesüßten Getränke, bei denen zum Erhalt des Süßegrads die Menge an natürlichem Süßstoff, enthaltend oder bestehend aus Saccharose, geringer ist, bevorzugt um mindestens 2,0 Gew.-% geringer ist, weiter bevorzugt um mindestens 4,0 Gew.-% geringer ist, noch weiter bevorzugt um mindestens 6,0 Gew.-% geringer ist, besonders bevorzugt um mindestens 8,0 Gew.-% geringer ist und insbesondere um mindestens 10,0 Gew.-% geringer ist als bei einem Getränk, das mit dem gesüßten Getränk, einschließlich des Süßegrads, im Wesentlichen identisch ist, mit dem Unterschied, dass für dessen Herstellung kein mineralstoffreiches Wasser verwendet wird, wobei kein mineralstoffreichen Wassers solches Wasser ist, bei dem der als fester Rückstand berechnete Mineralstoffgehalt dieses Wassers, das kein mineralstoffreichen Wasser ist, nicht mehr als 500 mg/1, bevorzugt nicht mehr als 50 mg/1, gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272) beträgt, vorzugsweise Wasser mit einer Gesamthärte °dH von maximal 10, bevorzugt von weniger als 8,4 und besonders bevorzugt von maximal 7,3, jeweils ermittelt gemäß dem Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol Gesamthärte je Liter, zu verwenden ist. Für die Ermittlung der Gesamthärte ist demgemäß die Summe der Konzentrationen der Kationen von Erdalkalimetallen in Wasser heranzuziehen.

Im Sinne der Erfindung ist unter Wasser, das kein mineralstoffreichen Wassers ist, ein solches Wasser zu verstehen, bei dem der als fester Rückstand berechnete Mineralstoffgehalt dieses Wassers, das kein mineralstoffreichen Wasser ist, nicht mehr als 500 mg/l, bevorzugt nicht mehr als 50 mg/l gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272), beträgt.

Unter mineralstoffreichem Wasser im Sinne der Erfindung ist ein solches Wasser zu verstehen, bei dem der als fester Rückstand berechnete Mineralstoffgehalt dieses mineralstoffreichen Wassers mehr als 1.000 mg/l, bevorzugt mehr als 1.500 mg/l gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272), beträgt. Besonders bevorzugt soll dabei unter mineralstoffreichem Wasser solches Wasser verstanden werden, das mindestens 240 mg/l (5.988 mmol/l), bevorzugt 240 (5.988 mmol/l) bis 360 mg/l (8,982 mmol/l) und besonders bevorzugt 270 (6,737 mmol/l) bis 340 mg/l (8,483 mmol/l), Calcium-Ionen enthält, jeweils ermittelt gemäß EN ISO 17294-2:2016.

In besonders zweckmäßigen Ausgestaltungen enthält das mineralstoffreiche Wasser der erfindungsgemäßen gesüßten Getränke oder das Getränk, insbesondere zusätzlich, mindestens 56 mg/l (2,304 mmol/1), bevorzugt 56 (2,304 mmol/l) bis 90 mg/l (3,703 mmol/l) und besonders bevorzugt 60 (1,234 mmol/1) bis 72 mg/l (2,962 mmol/l), Magnesium-Ionen.

In weiteren, sehr zweckmäßigen Ausgestaltungen enthält das mineralstoffreiche Wasser der erfindungsgemäßen gesüßten Getränke oder das Getränk, insbesondere zusätzlich zu den vorangehend spezifizierten Mengen an Calcium- und/oder Magnesium-Ionen, mindestens 150 mg/l, bevorzugt 150 bis 300 mg/l und besonders bevorzugt 160 bis 240 mg/l, Natrium-Ionen.

In noch weiteren, sehr zweckmäßigen Ausgestaltungen enthält das mineralstoffreiche Wasser der erfindungsgemäßen gesüßten Getränke oder das Getränk, insbesondere zusätzlich zu den vorangehend spezifizierten Mengen an Calcium-, Magnesium- und/oder Natrium-Ionen, mindestens 18 mg/l, bevorzugt 18 bis 25 mg/l und besonders bevorzugt 21 bis 24 mg/l, Kalium-Ionen.

In noch weiteren, sehr zweckmäßigen Ausgestaltungen enthält das mineralstoffreiche Wasser der erfindungsgemäßen gesüßten Getränke oder das Getränk, insbesondere zusätzlich zu den vorangehend spezifizierten Mengen an Calcium-, Magnesium-, Natrium- und/oder Kalium-Ionen, mindestens 800 mg/l, bevorzugt 800 bis 1400 mg/l und besonders bevorzugt 900 bis 1200 mg/l, Hydrogencarbonat-Ionen.

In noch weiteren, sehr zweckmäßigen Ausgestaltungen enthält das mineralstoffreiche Wasser der erfindungsgemäßen gesüßten Getränke oder das Getränk, insbesondere zusätzlich zu den vorangehend spezifizierten Mengen an Calcium-, Magnesium-, Natrium-, Kalium- und/oder Hydrogencarbonat-Ionen, mindestens 3,5 mg/l, bevorzugt 3,8 bis 6,0 mg/l und besonders bevorzugt 4,0 bis 5,0 mg/l, Eisen-Ionen.

In noch weiteren, sehr zweckmäßigen Ausgestaltungen enthält das mineralstoffreiche Wasser der erfindungsgemäßen gesüßten Getränke, insbesondere zusätzlich zu den vorangehend spezifizierten Mengen an Calcium-, Magnesium-, Natrium-, Kalium-, Hydrogencarbonat- und/oder Eisen-Ionen, mindestens 150 µg/l, bevorzugt 175 bis 400 µg/l und besonders bevorzugt 200 bis 275 µg/l, Mangan-Ionen,

In noch weiteren, sehr zweckmäßigen Ausgestaltungen enthält das mineralstoffreiche Wasser der erfindungsgemäßen gesüßten Getränke oder das Getränk, insbesondere zusätzlich zu den vorangehend spezifizierten Mengen an Calcium-, Magnesium-, Natrium-, Kalium-, Hydrogencarbonat-, Eisen- und/oder Mangan-Ionen, mindestens 250 µg/l, bevorzugt 300 bis 1500 µg/l und besonders bevorzugt 350 bis 1250 µg/l, Lithium-Ionen,

Die der Erfindung zugrunde liegende Aufgabe lässt sich besonders mit solchen gesüßten Getränken lösen, bei denen das mineralstoffreiche Wasser, insbesondere das Getränk, mindestens 240 mg/l (5.988 mmol/l), bevorzugt 240 (5.988 mmol/l) bis 360 mg/l (8,982 mmol/l) und besonders bevorzugt 270 (6,737 mmol/l) bis 340 mg/l (8,483 mmol/l), Calcium-Ionen, jeweils ermittelt gemäß EN ISO 17294-2:2016, mindestens 56 mg/l (2,304 mmol/l), bevorzugt 56 (2,304 mmol/l) bis 90 mg/l (3,703 mmol/l) und besonders bevorzugt 60 (1,234 mmol/l) bis 72 mg/l (2,962 mmol/l), Magnesium-Ionen, jeweils ermittelt gemäß EN ISO 17294-2:2016 und mindestens 150 mg/l, bevorzugt 150 bis 300 mg/l und besonders bevorzugt 160 bis 240 mg/l, Natrium-Ionen, jeweils ermittelt gemäß EN ISO 17294-2:2016, enthält. Hierbei sind solche gesüßten Getränke besonders geeignet, bei denen das mineralstoffreiche Wasser, insbesondere das Getränk, zusätzlich mindestens 250 mg/l, bevorzugt 275 bis 1000 mg/l und besonders bevorzugt 320 bis 550 mg/l, SulfatIonen, jeweils ermittelt gemäß DIN EN ISO 10304-1:2009-07, und/oder, vorzugsweise und, mindestens 150 mg/l, bevorzugt 200 bis 400 mg/l und besonders bevorzugt 205 bis 300 mg/l, Chlorid-Ionen, jeweils ermittelt gemäß DIN EN ISO 10304-1:2009-07, enthält.

Das mineralstoffreiche Wasser der erfindungsgemäßen gesüßten Getränke verfügt in einer bevorzugten Ausführungsform über eine Gesamthärte °dH von mindestens 40, bevorzugt im Bereich von 45 bis 70 und insbesondere im Bereich von 50 bis 65, verfügt, jeweils ermittelt gemäß dem Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol Gesamthärte je Liter.

In zweckmäßigen Ausgestaltungen wird für das erfindungsgemäße gesüßte Getränk zurückgegriffen auf mineralstoffreiches Wasser, das über eine Carbonat-Härte im Bereich von 30 bis 70, bevorzugt im Bereich von 35 bis 60 und besonders bevorzugt im Bereich von 40 bis 55 °dH, jeweils ermittelt gemäß DIN 38409-7:2005-12, und/oder, bevorzugt und, über eine Magnesium-Härte im Bereich von 5 bis 30, bevorzugt im Bereich von 8 bis 25 und besonders bevorzugt im Bereich von 10 bis 20 °dH, jeweils ermittelt gemäß DIN 38409-7:2005-12, verfügt.

Das mineralstoffreiche Wasser der erfindungsgemäßen gesüßten Getränke oder das gesüßte Getränk verfügt vorzugsweise über einen pH-Wert im Bereich von 5,5 bis 7,0, bevorzugt im Bereich von 6,0 bis 6,8 und besonders bevorzugt im Bereich von 6,30 bis 6,70, jeweils ermittelt gemäß DIN EN ISO 10523:2012-04, verfügt.

Alternativ oder zusätzlich kann das mineralstoffreiche Wasser der erfindungsgemäßen gesüßten Getränke über einen Leitwert im Bereich von 2000 bis 3000 µS/ cm, bevorzugt im Bereich von 2200 bis 2800 µS/ cm und besonders bevorzugt im Bereich von 2300 bis 2700 µS/ cm, verfügen oder vorzugsweise auf einen Leitwert im Bereich von 2000 bis 3000 µS/ cm, bevorzugt im Bereich von 2200 bis 2800 µS/ cm und besonders bevorzugt im Bereich von 2300 bis 2700 µ3/cm, jeweils ermittelt gemäß DIN EN 27888:1993-11, eingestellt werden.

In einer vorteilhaften Ausführungsform enthält das erfindungsgemäße gesüßte Getränk 250 bis 500 mg/l, bevorzugt 300 bis 450 mg/l und besonders bevorzugt 320 bis 420 mg/l MgSO₄, 300 bis 750 mg/l, bevorzugt 350 bis 600 mg/l und besonders bevorzugt 400 bis 550 mg/l CaCl₂, 150 bis 600 mg/l, bevorzugt 200 bis 500 mg/l und besonders bevorzugt 275 bis 400 mg/l Na₂SO₄ und/oder, bevorzugt und, 600 bis 1500 mg/l, bevorzugt 700 bis 1400 mg/l und besonders bevorzugt 800 bis 1100 mg/l NaHCO₃.

Auch solche Ausführungsformen sind bevorzugt, bei denen das erfindungsgemäße gesüßte Getränk 100 bis 500 mg/l, bevorzugt 150 bis 400 mg/l und besonders bevorzugt 200 bis 300 mg/l Magnesiumcitrat und/ oder, bevorzugt und, 200 bis 1000 mg/ l, bevorzugt 250 bis 800 mg/l und besonders bevorzugt 300 bis 650 mg/l Natriumcitrat, enthält.

In bevorzugten Ausführungsformen, insbesondere betreffend Limonaden, enthalten die erfindungsgemäßen gesüßten Getränke maximal 7,0 Gew.-%, bevorzugt maximal 6,0 Gew.-% und besonders bevorzugt maximal 5,5 Gew.-%, an dem natürlichen Süßstoff, enthaltend oder vorzugsweise bestehend aus Saccharose. In weiteren zweckmäßigen Ausgestaltungen, insbesondere betreffend Soft- und Energydrinks, enthalten die erfindungsgemäßen gesüßten Getränke maximal 11,0 Gew.-%, bevorzugt maximal 10,0 Gew.-% und besonders bevorzugt maximal 9,0 Gew.-%, an dem natürlichen Süßstoff, enthaltend oder vorzugsweise bestehend aus Saccharose

Hierbei sind solche erfindungsgemäßen gesüßten Getränke besonders bevorzugt, die maximal 100 g/l Saccharose, bevorzugt im Bereich von 45 bis 70 g/l Saccharose und besonders bevorzugt im Bereich von 50 bis 60 g/l, Saccharose, insbesondere als einzigen natürlichen Süßstoff enthalten, besonders bevorzugt als alleiniges Süßungsmittel.

In zweckmäßigen Ausgestaltungen umfassen die natürlichen Süßstoffe im Sinne der Erfindung neben Saccharose Monosaccharide, ausgewählt aus der Gruppe bestehend aus Fruktose, Glukose, Arabinonse, Mannose, Rhamnose, Xylose, Tagatose, Galaktose und Mischungen hiervon, Dissaccharide, ausgewählt aus der Gruppe bestehend aus Trehalose, Laktose, Maltose und Mischungen hiervon, süßschmeckende Zuckeralkohole, ausgewählt aus der Gruppe bestehend aus Erythritol, Glycerol, Mannitol, Sorbitol, Xylitol und Mischungen hiervon, und Steviolglycoside, insbesondere ausgewählt aus der Gruppe bestehend aus Rebaudiosiden, Steviosiden, Steviolbiosiden, Rubusoside, Dulcoside, enzymatisch modifizierten Steviolglycosiden und Mischungen hiervon.

Erfindungsgemäße gesüßte Getränke können ferner mindestens einen künstlichen Süßstoff, insbesondere ausgewählt aus der Gruppe bestehend aus Aspartam, Sucralose, Neotam, Alitam, Glucin, Acesulfam-Kalium, Cyclamat, Saccharin, Neohesperidin-Dihydrochalkon und Mischungen hiervon, umfassen.

Auch können die erfindungsgemäßen gesüßten Getränke Taurin und/oder Koffein enthalten.

Als Geschmacksverstärker können zudem Thaumatin, Phloretin, Trilobatin, Monatin und/oder Hesperetin zugesetzt sein.

Die erfindungsgemäßen gesüßten Getränke können, insbesondere kohlensäurehaltige, Softdrinks, insbesondere mit Cola- oder Fruchtgeschmack, Energydrinks oder Limonaden darstellen oder für die Herstellung solcher Getränke verwendet werden.

Die der Erfindung zugrunde liegende Aufgabe wird des Weiteren gelöst durch die Verwendung von mineralstoffreichem Wasser, insbesondere wie vorangehend im Allgemeinen und im Detail spezifiziert, bei der Herstellung von gesüßten Getränken zur Verstärkung des süßen sensorischen Eindrucks bzw. zur Verstärkung der Süßkraft von natürlichen Süßstoffen, umfassend oder bestehend aus Saccharose, und/oder zur Verstärkung der Vollmundigkeit, insbesondere zur Verstärkung der Süßkraft, in mit diesen natürlichen Süßstoffen gesüßten Getränken.

Dieses mineralstoffreiche Wasser wird dabei für die Herstellung von mit natürlichen Süßstoffen, enthaltend oder vorzugsweise bestehend aus Saccharose, gesüßten Getränken, insbesondere Limonaden, mit reduziertem Zuckergehalt eingesetzt. Unter einer Limonade im Sinne der Erfindung soll dabei ein alkoholfreies, gesüßtes und gegebenenfalls mit Kohlensäure versetztes Erfrischungsgetränk mit Fruchtauszügen auf Wasserbasis verstanden werden.

Mit der erfindungsgemäßen Verwendung gelingt es, zu gesüßten Getränke mit reduziertem Gehalt an natürlichen Süßstoffen, enthaltend oder vorzugsweise bestehend aus Saccharose, zu gelangen, die einen Süßegrad aufweisen, der vergleichbar ist mit dem Süßegrad von mit diesen natürlichen Süßstoffen, enthaltend oder vorzugsweise bestehend aus Saccharose, gesüßten Getränken, hergestellt mit Wasser, das kein mineralstoffreiches Wasser ist, vorzugsweise mit Wasser mit einer Gesamthärte °dH von maximal 10, bevorzugt von weniger als 8,4 und besonders bevorzugt von maximal 7,3, jeweils ermittelt gemäß dem Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol Gesamthärte je Liter.

Demgemäß wurde auch die Verwendung von mineralstoffreichem Wasser, insbesondere wie im Allgemeinen und im Speziellen vorgehend definiert, für die Verringerung des Gehalts an natürlichen Süßstoffen, umfassend oder vorzugsweise bestehend aus Saccharose, in gesüßten Getränken wie Limonaden, insbesondere ohne eine Verringerung des Süßegrads in Kauf nehmen zu müssen, gefunden.

## Patentansprüche

1. Gesüßtes Getränk mit einem Süßegrad, hergestellt mit
mineralstoffreichem Wasser, wobei mineralstoffreiches Wasser solches Wasser ist, bei dem der als fester Rückstand berechnete Mineralstoffgehalt dieses mineralstoffreichen Wassers mehr als 1.000 mg/l gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272), beträgt, und
einem oder mehreren natürlichen Süßstoffen, enthaltend oder bestehend aus Saccharose,
wobei das mineralstoffreiche Wasser oder das Getränk über eine Gesamthärte °dH von mindestens 35 verfügt, ermittelt gemäß Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol der Kationen von Erdalkalimetallen je Liter.

2. Getränk nach Anspruch 1, **dadurch gekennzeichnet, dass**
zum Erhalt des Süßegrads die Menge an natürlichem Süßstoff, enthaltend oder bestehend aus Saccharose, geringer ist, bevorzugt um mindestens 2,0 Gew.-% geringer ist, besonders bevorzugt um mindestens 4,0 Gew.-% geringer ist und insbesondere um mindestens 6,0 Gew.-% geringer ist, als bei einem Getränk, das mit dem gesüßten Getränk, einschließlich des Süßegrads, im Wesentlichen identisch ist, mit dem Unterschied, dass für dessen Herstellung kein mineralstoffreiches Wasser verwendet wird, wobei kein mineralstoffreiches Wasser solches Wasser ist, bei dem der als fester Rückstand berechnete Mineralstoffgehalt dieses Wassers nicht mehr als 500 mg/l gemäß Anlage 6 zu § 9 Abs. 3 der Mineral- und Tafelwasser-Verordnung der Bundesrepublik Deutschland vom 1. August 1984 (BGBl. I S. 1036), zuletzt geändert durch Artikel 25 der Verordnung vom 5. Juli 2017 (BGBl. I S. 2272), beträgt, vorzugsweise Wasser mit einer Gesamthärte °dH von maximal 10, bevorzugt von weniger als 8,4 und besonders bevorzugt von maximal 7,3, jeweils ermittelt gemäß Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol der Kationen von Erdalkalimetallen je Liter.

3. Gesüßtes Getränk nach Anspruch 2, **dadurch gekennzeichnet, dass**
der als fester Rückstand berechnete Mineralstoffgehalt des Wassers, das kein mineralstoffreiches Wassers ist, nicht mehr als 50 mg/l beträgt.

4. Gesüßtes Getränk nach einem der vorangehenden Ansprüche, **dadurch gekennzeichnet, dass**
das mineralstoffreiche Wasser, insbesondere das Getränk, mindestens 240 mg/l, bevorzugt 240 bis 360 mg/l und besonders bevorzugt 270 bis 340 mg/l, Calcium-Ionen, jeweils ermittelt gemäß EN ISO 17294-2:2016, und/oder mindestens 56 mg/l, bevorzugt 56 bis 90 mg/l und besonders bevorzugt 60 bis 72 mg/l, Magnesium-Ionen, jeweils ermittelt gemäß EN ISO 17294-2:2016, und/oder mindestens 150 mg/l, bevorzugt 150 bis 300 mg/l und besonders bevorzugt 160 bis 240 mg/l, Natrium-Ionen, jeweils ermittelt gemäß EN ISO 17294-2:2016, enthält.

5. Gesüßtes Getränk nach einem der vorangehenden Ansprüche, **dadurch gekennzeichnet, dass**
das mineralstoffreiche Wasser, insbesondere das Getränk, mindestens 250 mg/l, bevorzugt 275 bis 1000 mg/l und besonders bevorzugt 320 bis 550 mg/l, SulfatIonen, jeweils ermittelt gemäß DIN EN ISO 10304-1:2009-07,
und/oder
mindestens 150 mg/1, bevorzugt 200 bis 400 mg/l und besonders bevorzugt 205 bis 300 mg/l, Chlorid-Ionen, jeweils ermittelt gemäß DIN EN ISO 10304-1:2009-07, enthält.

6. Gesüßtes Getränk nach einem der vorangehenden Ansprüche, **dadurch gekennzeichnet, dass**
das mineralstoffreiche Wasser, insbesondere das Getränk, mindestens 240 mg/l, bevorzugt 240 bis 360 mg/l und besonders bevorzugt 270 bis 340 mg/l, Calcium-Ionen, jeweils ermittelt gemäß EN ISO 17294-2:2016, mindestens 56 mg/l, bevorzugt 56 bis 90 mg/l und besonders bevorzugt 60 bis 72 mg/l, Magnesium-Ionen, jeweils ermittelt gemäß EN ISO 17294-2:2016 und mindestens 150 mg/l, bevorzugt 150 bis 300 mg/l und besonders bevorzugt 160 bis 240 mg/l, Natrium-Ionen, jeweils ermittelt gemäß EN ISO 17294-2:2016, sowie gegebenenfalls mindestens 250 mg/l, bevorzugt 275 bis 1000 mg/l und besonders bevorzugt 320 bis 550 mg/l, Sulfat-Ionen, jeweils ermittelt gemäß DIN EN ISO 10304-1:2009-07, und/oder mindestens 150 mg/l, bevorzugt 200 bis 400 mg/l und besonders bevorzugt 205 bis 300 mg/l, Chlorid-Ionen, jeweils ermittelt gemäß DIN EN ISO 10304-1:2009-07, enthält.

7. Gesüßtes Getränk nach einem der vorangehenden Ansprüche, **dadurch gekennzeichnet, dass**
das mineralstoffreiche Wasser, insbesondere das Getränk, mindestens 18 mg/l, bevorzugt 18 bis 25 mg/l und besonders bevorzugt 21 bis 24 mg/l, Kalium-Ionen, jeweils ermittelt gemäß EN ISO 17294-2:2016, und/oder mindestens 3,5 mg/1, bevorzugt 3,8 bis 6,0 mg/l und besonders bevorzugt 4,0 bis 5,0 mg/l, Eisen-Ionen, jeweils ermittelt gemäß EN ISO 17294-2:2016, und/oder mindestens 150 µg/l, bevorzugt 175 bis 400 µg/l und besonders bevorzugt 200 bis 275 µg/l, Mangan-Ionen, jeweils ermittelt gemäß EN ISO 17294-2:2016, und/oder
mindestens 250 µg/l, bevorzugt 300 bis 1500 µg/l und besonders bevorzugt 350 bis 1250 µg/l, Lithium-Ionen, jeweils ermittelt gemäß EN ISO 17294-2:2016, und/oder mindestens 800 mg/l, bevorzugt 800 bis 1400 mg/l und besonders bevorzugt 900 bis 1200 mg/l, Hydrogencarbonat-Ionen, jeweils ermittelt gemäß DIN 38409-7:2005-12, enthält.

8. Gesüßtes Getränk nach einem der vorangehenden Ansprüche, **dadurch gekennzeichnet, dass**
das mineralstoffreiche Wasser oder das Getränk über einen pH-Wert im Bereich von 5,5 bis 7,0, bevorzugt im Bereich von 6,0 bis 6,8 und besonders bevorzugt im Bereich von 6,30 bis 6,70, jeweils ermittelt gemäß DIN EN ISO 10523:2012-04, und/oder über einen Leitwert im Bereich von 2000 bis 3000 µS/cm, bevorzugt im Bereich von 2200 bis 2800 µS/cm und besonders bevorzugt im Bereich von 2300 bis 2700 µS/cm, jeweils ermittelt gemäß DIN EN 27888:1993-11, verfügt.

9. Gesüßtes Getränk nach einem der vorangehenden Ansprüche, **dadurch gekennzeichnet, dass**
das mineralstoffreiche Wasser oder das Getränk über eine Gesamthärte °dH von mindestens 40, bevorzugt im Bereich von 45 bis 70 und insbesondere im Bereich von 50 bis 65, verfügt, jeweils ermittelt gemäß Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol der Kationen von Erdalkalimetallen je Liter.

10. Gesüßtes Getränk nach einem der vorangehenden Ansprüche, **dadurch gekennzeichnet, dass**
das mineralstoffreiche Wasser oder das Getränk eine Carbonat-Härte im Bereich von 30 bis 70, bevorzugt im Bereich von 35 bis 60 und besonders bevorzugt im Bereich von 40 bis 55 °dH, jeweils ermittelt gemäß DIN 38409-7:2005-12, und/oder eine Magnesium-Härte im Bereich von 5 bis 30, bevorzugt im Bereich von 8 bis 25 und besonders bevorzugt im Bereich von 10 bis 20 °dH, jeweils ermittelt gemäß DIN 38409-7:2005-12, aufweist,

11. Gesüßtes Getränk nach einem der vorangehenden Ansprüche, enthaltend
250 bis 500 mg/l, bevorzugt 300 bis 450 mg/l und besonders bevorzugt 320 bis 420 mg/l MgSO₄, 300 bis 750 mg/l, bevorzugt 350 bis 600 mg/l und besonders bevorzugt 400 bis 550 mg/l CaCl₂, 150 bis 600 mg/l, bevorzugt 200 bis 500 mg/l und besonders bevorzugt 275 bis 400 mg/l Na₂SO₄, und/oder 600 bis 1500 mg/l, bevorzugt 700 bis 1400 mg/l und besonders bevorzugt 800 bis 1100 mg/l NaHCO₃.

12. Gesüßtes Getränk nach einem der vorangehenden Ansprüche, enthaltend
100 bis 500 mg/l, bevorzugt 150 bis 400 mg/l und besonders bevorzugt 200 bis 300 mg/l Magnesiumcitrat und/oder 200 bis 1000 mg/l, bevorzugt 250 bis 800 mg/l und besonders bevorzugt 300 bis 650 mg/l Natriumcitrat.

13. Gesüßtes Getränk nach einem der vorangehenden Ansprüche, **dadurch gekennzeichnet, dass**
der als fester Rückstand berechnete Mineralstoffgehalt des mineralstoffreichen Wassers mehr als 1.000 mg/l, bevorzugt mehr als 1.500 mg/l beträgt.

14. Gesüßtes Getränk nach einem der vorangehenden Ansprüche, enthaltend
maximal 7,0 Gew.-%, bevorzugt maximal 6,0 Gew.-% und besonders bevorzugt maximal 5,5 Gew.-%, an dem natürlichen Süßstoff, enthaltend oder bestehend aus Saccharose.

15. Gesüßtes Getränk nach einem der vorangehenden Ansprüche, enthaltend
maximal 100 g/l Saccharose, bevorzugt im Bereich von 45 bis 70 g/l Saccharose und besonders bevorzugt im Bereich von 50 bis 60 g/l, Saccharose, insbesondere als einzigen natürlichen Süßstoff.

16. Gesüßtes Getränk nach einem der vorangehenden Ansprüche, **dadurch gekennzeichnet, dass**
die natürlichen Süßstoffe neben Saccharose ferner Monosaccharide, ausgewählt aus der Gruppe bestehend aus Fruktose, Glukose, Arabinose, Mannose, Rhamnose, Xylose, Tagatose, Galaktose und Mischungen hiervon,
Dissaccharide, ausgewählt aus der Gruppe bestehend aus Trehalose, Laktose, Maltose und Mischungen hiervon, süßschmeckende Zuckeralkohole, insbesondere ausgewählt aus der Gruppe bestehend aus Erythritol, Glycerol, Mannitol, Sorbitol, Xylitol und Mischungen hiervon, und/oder Steviolglycoside, ausgewählt aus der Gruppe bestehend aus Rebaudiosiden, Steviosiden, Steviolbiosiden, Rubusoside, Dulcoside, enzymatisch modifizierten Steviolglycosiden und Mischungen hiervon, umfassen.

17. Gesüßtes Getränk nach einem der vorangehenden Ansprüche, ferner umfassend mindestens einen künstlichen Süßstoff, insbesondere ausgewählt aus der Gruppe bestehend aus Aspartam, Sucralose, Neotam, Alitam, Glucin, Acesulfam-Kalium, Cyclamat, Saccharin, Neohesperidin-Dihydrochalkon und Mischungen hiervon und/oder ferner umfassend Taurin und/oder Koffein und/oder ferner umfassend Thaumatin, Phloretin, Trilobatin, Monatin und/oder Hesperetin.

18. Gesüßtes Getränk nach einem der vorangehenden Ansprüche, **dadurch gekennzeichnet, dass**
dieses einen, insbesondere kohlensäurehaltigen, Softdrink, insbesondere mit Cola- oder Fruchtgeschmack, Energydrink oder eine Limonade darstellt.

19. Verwendung von mineralstoffreichem Wasser gemäß einem der vorangehenden Ansprüche bei der Herstellung von gesüßten Getränken zur Verstärkung des süßen sensorischen Eindrucks bzw. zur Verstärkung der Süßkraft von natürlichen Süßstoffen, umfassend oder bestehend aus Saccharose, und/oder zur Verstärkung der Vollmundigkeit, insbesondere zur Verstärkung der Süßkraft, in mit diesen natürlichen Süßstoffen gesüßten Getränken.

20. Verwendung, insbesondere nach Anspruch 19, von mineralstoffreichem Wasser gemäß einem der Ansprüche 1 bis 18 für die Herstellung von mit natürlichen Süßstoffen, enthaltend oder bestehend aus Saccharose, gesüßten Getränken, insbesondere Limonaden, mit reduziertem Zuckergehalt.

21. Verwendung nach Anspruch 19 oder 20, **dadurch gekennzeichnet, dass** die gesüßten Getränke mit reduziertem Gehalt an natürlichen Süßstoffen, enthaltend oder bestehend aus Saccharose, einen Süßegrad aufweisen, der vergleichbar ist mit dem Süßegrad von mit diesen natürlichen Süßstoffen, enthaltend oder bestehend aus Saccharose, gesüßten Getränken, hergestellt mit Wasser, das kein mineralstoffreiches Wasser ist, vorzugsweise mit Wasser mit einer Gesamthärte °dH von maximal 10, bevorzugt von weniger als 8,4 und besonders bevorzugt von maximal 7,3, jeweils ermittelt gemäß Wasch- und Reinigungsmittelgesetz der Bundesrepublik Deutschland, in der am 5. Mai 2007 in Kraft getretenen Fassung, wobei die im Gesetz vorgesehene Angabe Millimol Calciumcarbonat je Liter zu ersetzen ist durch die Angabe Millimol der Kationen von Erdalkalimetallen je Liter.

22. Verwendung, insbesondere nach einem der Ansprüche 19 bis 21, von mineralstoffreichem Wasser gemäß einem der Ansprüche 1 bis 18 für die Verringerung des Gehalts an natürlichen Süßstoffen, umfassend oder bestehend aus Saccharose, in gesüßten Getränken, insbesondere ohne eine Verringerung des Süßegrads zu erzeugen.

## Claims

1. A sweetened beverage having a degree of sweetness, produced using mineral-rich water, wherein mineral-rich water is water of which the mineral content, calculated as a solid residue, is more than 1,000 mg/l in accordance with annex 6 to section 9, paragraph 3 of the Mineral and Table Water Regulation of the Federal Republic of Germany, dated August 1, 1984 (BGBl. I p. 1036), last amended by article 25 of the regulation dated July 5, 2017 (BGBl. I p. 2272), and
one or more natural sweeteners, containing or consisting of saccharose,
the mineral-rich water or the beverage having a total hardness °dH of at least 35, determined in accordance with the Washing and Cleaning Agents Act of the Federal Republic of Germany, in the version that came into effect on May 5, 2007, wherein the indication millimoles of calcium carbonate per litre provided in said act is to be replaced with millimoles of cations of alkaline earth metals per litre.

2. The beverage according to Claim 1, **characterised in that**,
in order to obtain the degree of sweetness, the amount of natural sweetener, containing or consisting of saccharose, is smaller, preferably by at least 2.0 wt.%, particularly preferably by at least 4.0 wt.% and in particular by at least 6.0 wt.%, than a beverage which is substantially identical to the sweetened beverage, including the degree of sweetness, except that water that is not mineral-rich is used to produce said beverage, water that is not mineral-rich being water of which the mineral content, calculated as a solid residue, is not more than 500 mg/l in accordance with annex 6 to section 9, paragraph 3 of the Mineral and Table Water Regulation of the Federal Republic of Germany, dated August, 1 1984 (BGBl. I p 1036), last amended by article 25 of the regulation dated July 5, 2017 (BGBl. I p. 2272), preferably water having a total hardness °dH of at most 10, preferably less than 8.4 and particularly preferably at most 7.3, each determined in accordance with the Washing and Cleaning Agents Act of the Federal Republic of Germany, in the version that came into effect on May 5, 2007, wherein the indication millimoles of calcium carbonate per litre provided in said act is to be replaced with millimoles of cations of alkaline earth metals per litre..

3. The sweetened beverage according to Claim 2, **characterised in that** the mineral content of the water that is not mineral-rich, calculated as a solid residue, is not more than 50 mg/l.

4. The sweetened beverage according to any of the preceding claims, **characterised in that**
the mineral-rich water, in particular the beverage, contains at least 240 mg/l, preferably 240 to 360 mg/l and particularly preferably 270 to 340 mg/l, calcium ions, determined in each case in accordance with EN ISO 17294-2:2016, and/or at least 56 mg/l, preferably 56 to 90 mg/l and particularly preferably 60 to 72 mg/l, magnesium ions, determined in each case in accordance with EN ISO 17294-2:2016, and/or at least 150 mg/l, preferably 150 to 300 mg/l and particularly preferably 160 to 240 mg/l, sodium ions, determined in each case in accordance with EN ISO 17294-2:2016.

5. The sweetened beverage according to any of the preceding claims, **characterised in that**
the mineral-rich water, in particular the beverage, contains at least 250 mg/l, preferably 275 to 1,000 mg/l and particularly preferably 320 to 550 mg/l, sulphate ions, determined in each case in accordance with DIN EN ISO 10304-1:2009-07, and/or
at least 150 mg/l, preferably 200 to 400 mg/l and particularly preferably 205 to 300 mg/l, chloride ions, determined in each case in accordance with DIN EN ISO 10304-1:2009-07.

6. The sweetened beverage according to any of the preceding claims, **characterised in that**
the mineral-rich water, in particular the beverage, contains at least 240 mg/l, preferably 240 to 360 mg/l and particularly preferably 270 to 340 mg/l, calcium ions, determined in each case in accordance with EN ISO 17294-2:2016, at least 56 mg/l, preferably 56 to 90 mg/l and particularly preferably 60 to 72 mg/l, magnesium ions, determined in each case in accordance with EN ISO 17294-2:2016, and at least 150 mg/l, preferably 150 to 300 mg/l and particularly preferably 160 to 240 mg/l, sodium ions, determined in each case in accordance with EN ISO 17294-2:2016, as well as, optionally, at least 250 mg/l, preferably 275 to 1,000 mg/l and particularly preferably 320 to 550 mg/l, sulphate ions, determined in each case in accordance with DIN EN ISO 10304-1:2009-07, and/or at least 150 mg/l, preferably 200 to 400 mg/l and particularly preferably 205 to 300 mg/l, chloride ions, determined in each case in accordance with DIN EN ISO 10304-1:2009-07.

7. The sweetened beverage according to any of the preceding claims, **characterised in that**
the mineral-rich water, in particular the beverage, contains at least 18 mg/l, preferably 18 to 25 mg/l and particularly preferably 21 to 24 mg/l, potassium ions, determined in each case in accordance with EN ISO 17294-2:2016, and/or at least 3.5 mg/l, preferably 3.8 to 6.0 mg/l and particularly preferably 4.0 to 5.0 mg/l, iron ions, determined in each case in accordance with EN ISO 17294-2:2016, and/or at least 150 µg/l, preferably 175 to 400 µg/l and particularly preferably 200 to 275 µg/l, manganese ions, determined in each case in accordance with EN ISO 17294-2:2016, and/or
at least 250 µg/l, preferably 300 to 1,500 µg/l and particularly preferably 350 to 1,250 µg/l, lithium ions, determined in each case in accordance with EN ISO 17294-2:2016, and/or at least 800 mg/l, preferably 800 to 1,400 mg/l and particularly preferably 900 to 1,200 mg/l, hydrogen carbonate ions, determined in each case in accordance with DIN 38409-7:2005-12.

8. The sweetened beverage according to any of the preceding claims, **characterised in that**
the mineral-rich water or the beverage has a pH value in the range of 5.5 to 7.0, preferably in the range of 6.0 to 6.8 and particularly preferably in the range of 6.30 to 6.70, determined in each case in accordance with DIN EN ISO 10523:2012-04, and/or a conductivity in the range of 2,000 to 3,000 µS/cm, preferably in the range of 2,200 to 2,800 µS/cm and particularly preferably in the range of 2,300 to 2,700 µS/cm, determined in each case in accordance with DIN EN 27888:1993-11.

9. The sweetened beverage according to any of the preceding claims, **characterised in that**
the mineral-rich water or the beverage has a total hardness °dH of at least 40, preferably in the range of 45 to 70 and in particular in the range of 50 to 65, determined in each case in accordance with the Washing and Cleaning Agents Act of the Federal Republic of Germany, in the version that came into effect on May 5, 2007, wherein the indication millimoles of calcium carbonate per litre provided in said act is to be replaced with millimoles of cations of alkaline earth metals per litre.

10. The sweetened beverage according to any of the preceding claims, **characterised in that**
the mineral-rich water or the beverage has a carbonate hardness in the range of 30 to 70, preferably in the range of 35 to 60 and particularly preferably in the range of 40 to 55 °dH, determined in each case in accordance with DIN 38409-7:2005-12, and/or a magnesium hardness in the range of 5 to 30, preferably in the range of 8 to 25 and particularly preferably in the range of 10 to 20 °dH, determined in each case in accordance with DIN 38409-7:2005-12.

11. The sweetened beverage according to any of the preceding claims, containing 250 to 500 mg/l, preferably 300 to 450 mg/l and particularly preferably 320 to 420 mg/l MgSO₄, 300 to 750 mg/l, preferably 350 to 600 mg/l and particularly preferably 400 to 550 mg/l CaCl₂, 150 to 600 mg/l, preferably 200 to 500 mg/l and particularly preferably 275 to 400 mg/l Na₂SO₄, and/or 600 to 1,500 mg/l, preferably 700 to 1,400 mg/l and particularly preferably 800 to 1,100 mg/l NaHCO₃.

12. The sweetened beverage according to any of the preceding claims, containing 100 to 500 mg/l, preferably 150 to 400 mg/l and particularly preferably 200 to 300 mg/l magnesium citrate and/or 200 to 1,000 mg/l, preferably 250 to 800 mg/l and particularly preferably 300 to 650 mg/l sodium citrate.

13. The sweetened beverage according to any of the preceding claims, **characterised in that**
the mineral content of the mineral-rich water, calculated as a solid residue, is more than 1,000 mg/l, preferably more than 1,500 mg/l.

14. The sweetened beverage according to any of the preceding claims, containing at most 7.0 wt.%, preferably at most 6.0 wt.% and particularly preferably at most 5.5 wt.%, of the natural sweetener, containing or consisting of saccharose.

15. The sweetened beverage according to any of the preceding claims, containing at most 100 g/l saccharose, preferably in the range of 45 to 70 g/l saccharose and particularly preferably in the range of 50 to 60 g/l saccharose, in particular as a single natural sweetener.

16. The sweetened beverage according to any of the preceding claims, **characterised in that**,
in addition to saccharose, the natural sweeteners further comprise monosaccharides, selected from the group consisting of fructose, glucose, arabinose, mannose, rhamnose, xylose, tagatose, galactose and mixtures thereof,
disaccharides, selected from the group consisting of trehalose, lactose, maltose and mixtures thereof, sweet-tasting sugar alcohols, in particular selected from the group consisting of erythritol, glycerol, mannitol, sorbitol, xylitol and mixtures thereof, and/or steviol glycosides, selected from the group consisting of rebaudiosides, steviosides, steviol biosides, rubusosides, dulcosides, enzymatically modified steviol glycosides and mixtures thereof.

17. The sweetened beverage according to any one of the preceding claims, further comprising at least one artificial sweetener, in particular selected from the group consisting of aspartame, sucralose, neotame, alitame, glucin, acesulfame potassium, cyclamate, saccharin, neohesperidin dihydrochalcone and mixtures thereof and/or further comprising taurine and/or caffeine and/or further comprising thaumatin, phloretin, trilobatin, monatin and/or hesperetin.

18. The sweetened beverage according to any of the preceding claims, **characterised in that**
said sweetened beverage is a, in particular carbonic-acid-containing, soft drink, in particular having a cola or fruit flavour, an energy drink or a lemonade.

19. Use of mineral-rich water according to any of the preceding claims in the production of sweetened beverages for enhancing the sweet sensory impression or for enhancing the sweetening power of natural sweeteners, comprising or consisting of saccharose, and/or for enhancing fullness, in particular for enhancing the sweetening power, in beverages sweetened with said natural sweeteners.

20. Use, in particular according to Claim 19, of mineral-rich water according to any of Claims 1 to 18, for the production of sweetened beverages sweetened with natural sweeteners, containing or consisting of saccharose, in particular lemonades, having a reduced sugar content.

21. The use according to Claim 19 or 20, **characterised in that**
the sweetened beverages having a reduced content of natural sweeteners, containing or consisting of saccharose, have a degree of sweetness that is comparable with the degree of sweetness of beverages sweetened with said natural sweeteners, containing or consisting of saccharose, said beverages being produced using water that is not mineral-rich water, preferably using water having a total hardness °dH of at most 10, preferably less than 8.4 and particularly preferably at most 7.3, determined in each case in accordance with the Washing and Cleaning Agents Act of the Federal Republic of Germany, in the version that came into effect on May 5, 2007, wherein the indication millimoles of calcium carbonate per litre provided in said act is to be replaced with millimoles of cations of alkaline earth metals per litre.

22. Use, in particular according to any of Claims 19 to 21, of mineral-rich water according to any of Claims 1 to 18 for reducing the content of natural sweeteners, comprising or consisting of saccharose, in sweetened beverages, in particular without producing a reduction in the degree of sweetness.

## Revendications

1. Boisson édulcorée ayant un degré de sucrosité, préparée avec
de l'eau riche en minéraux, l'eau riche en minéraux étant une eau dans laquelle la teneur en minéraux de cette eau riche en minéraux, calculée en tant que résidu solide, est supérieure à 1 000 mg/l, conformément à l'annexe 6 du § 9, alinéa 3, de l'ordonnance sur les eaux minérales et de table de la République fédérale d'Allemagne du 1er août 1984 (BGBl. I, p. 1036), modifiée en dernier lieu par l'article 25 de l'ordonnance du 5 juillet 2017 (BGBl. I, p. 2272), et
un ou plusieurs édulcorants naturels, contenant ou consistant en du saccharose,
l'eau riche en minéraux ou la boisson ayant une dureté totale °dH d'au moins 35, déterminée conformément à la loi sur les détergents et les produits de nettoyage de la République fédérale d'Allemagne, dans la version entrée en vigueur le 5 mai 2007, l'indication de millimoles de carbonate de calcium par litre prévue par la loi devant être remplacée par l'indication de millimoles de cations de métaux alcalino-terreux par litre.

2. Boisson selon la revendication 1, **caractérisée en ce que**
pour obtenir le degré de sucrosité, la quantité d'édulcorant naturel, contenant ou consistant en du saccharose, est inférieure, de préférence inférieure d'au moins 2,0 % en poids, de manière particulièrement préférée inférieure d'au moins 4,0 % en poids et en particulier inférieure d'au moins 6,0 % en poids, à une boisson qui est essentiellement identique à la boisson édulcorée, y compris le degré de sucrosité, à la différence qu'une eau qui n'est pas riche en minéraux est utilisée pour sa fabrication, une eau qui n'est pas riche en minéraux étant une eau dont la teneur en minéraux de cette eau, calculée en tant que résidu solide, n'est pas supérieure à 500 mg/l, conformément à l'annexe 6 du § 9, alinéa 3 de l'ordonnance sur les eaux minérales et de table de la République fédérale d'Allemagne du 1er août 1984 (BGBl 1 p. 1036), modifiée en dernier lieu par l'article 25 de l'ordonnance du 5 juillet 2017 (BGBl. I p. 2272), de préférence une eau ayant une dureté totale °dH de 10 au maximum, de préférence de moins de 8,4 et de manière particulièrement préférée de 7,3 au maximum, déterminée dans chaque cas conformément à la loi sur les détergents et les produits de nettoyage de la République fédérale d'Allemagne, dans la version entrée en vigueur le 5 mai 2007, l'indication de millimoles de carbonate de calcium par litre prévue par la loi devant être remplacée par l'indication de millimoles de cations de métaux alcalino-terreux par litre.

3. Boisson édulcorée selon la revendication 2, **caractérisée en ce que** la teneur en minéraux, calculée en tant que résidu solide, de l'eau qui n'est pas une eau riche en minéraux n'est pas supérieure à 50 mg/l.

4. Boisson édulcorée selon l'une quelconque des revendications précédentes, **caractérisée en ce que**
l'eau riche en minéraux, en particulier la boisson, contient au moins 240 mg/l, de préférence 240 à 360 mg/l, et de manière particulièrement préférée 270 à 340 mg/l, d'ions calcium, déterminés dans chaque cas conformément à EN ISO 17294-2:2016, et/ou au moins 56 mg/l, de préférence 56 à 90 mg/l et de manière particulièrement préférée 60 à 72 mg/l, d'ions magnésium, déterminés dans chaque cas conformément à EN ISO 17294-2:2016, et/ou au moins 150 mg/l, de préférence 150 à 300 mg/l et de manière particulièrement préférée 160 à 240 mg/l, d'ions sodium, déterminés dans chaque cas conformément à EN ISO 17294-2:2016.

5. Boisson édulcorée selon l'une quelconque des revendications précédentes, **caractérisée en ce que**
l'eau riche en minéraux, en particulier la boisson, contient au moins 250 mg/l, de préférence 275 à 1 000 mg/l, et de manière particulièrement préférée 320 à 550 mg/l, d'ions sulfate, déterminés dans chaque cas conformément à DIN EN ISO 10304-1:2009-07,
et/ou
au moins 150 mg/l, de préférence 200 à 400 mg/l et de manière particulièrement préférée 205 à 300 mg/l, d'ions chlorure, déterminés dans chaque cas conformément à DIN EN ISO 10304-1:2009-07.

6. Boisson édulcorée selon l'une quelconque des revendications précédentes, **caractérisée en ce que**
l'eau riche en minéraux, en particulier la boisson, contient au moins 240 mg/l, de préférence 240 à 360 mg/l et de manière particulièrement préférée 270 à 340 mg/l, d'ions calcium, déterminés dans chaque cas conformément à EN ISO 17294-2:2016, au moins 56 mg/l, de préférence 56 à 90 mg/l et de manière particulièrement préférée 60 à 72 mg/l, d'ions magnésium, déterminés dans chaque cas conformément à EN ISO 17294-2:2016, et au moins 150 mg/l, de préférence 150 à 300 mg/l et de manière particulièrement préférée 160 à 240 mg/l, d'ions sodium, déterminés dans chaque cas conformément à EN ISO 17294-2:2016, et éventuellement au moins 250 mg/l, de préférence 275 à 1 000 mg/l et de manière particulièrement préférée 320 à 550 mg/l, d'ions sulfate, déterminés dans chaque cas conformément à DIN EN ISO 10304-1:2009-07, et/ou au moins 150 mg/l, de préférence 200 à 400 mg/l et de manière particulièrement préférée 205 à 300 mg/l, d'ions chlorure, déterminés dans chaque cas conformément à DIN EN ISO 10304-1:2009-07.

7. Boisson édulcorée selon l'une quelconque des revendications précédentes, **caractérisée en ce que**
l'eau riche en minéraux, en particulier la boisson, contient au moins 18 mg/l, de préférence 18 à 25 mg/l et de manière particulièrement préférée 21 à 24 mg/l, d'ions potassium, déterminés dans chaque cas conformément à EN ISO 17294-2:2016, et/ou au moins 3,5 mg/l, de préférence 3,8 à 6,0 mg/l et de manière particulièrement préférée 4,0 à 5,0 mg/l, d'ions fer, déterminés dans chaque cas conformément à EN ISO 17294-2:2016, et/ou au moins 150 µg/l, de préférence 175 à 400 µg/l et de manière particulièrement préférée 200 à 275 µg/l, d'ions manganèse, déterminés dans chaque cas conformément à EN ISO 17294-2:2016, et/ou
au moins 250 µg/l, de préférence 300 à 1 500 µg/l et de manière particulièrement préférée 350 à 1 250 µg/l, d'ions lithium, déterminés dans chaque cas conformément à EN ISO 17294-2:2016, et/ou au moins 800 mg/l, de préférence 800 à 1 400 mg/l et de manière particulièrement préférée 900 à 1 200 mg/l, d'ions hydrogénocarbonate, déterminés dans chaque cas conformément à DIN 38409-7:2005-12.

8. Boisson édulcorée selon l'une quelconque des revendications précédentes, **caractérisée en ce que**
l'eau riche en minéraux ou la boisson a un pH dans la plage allant de 5,5 à 7,0, de préférence dans la plage allant de 6,0 à 6,8 et de manière particulièrement préférée dans la plage allant de 6,30 à 6,70, déterminé dans chaque cas conformément à DIN EN ISO 10523:2012-04, et/ou une conductance dans la plage allant de 2 000 à 3 000 µS/cm, de préférence dans la plage allant de 2 200 à 2 800 µS/cm et de manière particulièrement préférée dans la plage allant de 2 300 à 2 700 µS/cm, déterminée dans chaque cas conformément à DIN EN 27888:1993-11.

9. Boisson édulcorée selon l'une quelconque des revendications précédentes, **caractérisée en ce que**
l'eau riche en minéraux ou la boisson a une dureté totale °dH d'au moins 40, de préférence dans la plage allant de 45 à 70 et en particulier dans la plage allant de 50 à 65, déterminée dans chaque cas conformément à la loi sur les détergents et les produits de nettoyage de la République fédérale d'Allemagne, dans la version entrée en vigueur le 5 mai 2007, l'indication de millimoles de carbonate de calcium par litre prévue par la loi devant être remplacée par l'indication de millimoles de cations de métaux alcalino-terreux par litre .

10. Boisson édulcorée selon l'une quelconque des revendications précédentes, **caractérisée en ce que**
l'eau riche en minéraux ou la boisson a une dureté de carbonate dans la plage allant de 30 à 70, de préférence dans la plage allant de 35 à 60 et de manière particulièrement préférée dans la plage allant de 40 à 55 °dH, déterminée dans chaque cas conformément à DIN 38409-7:2005-12, et/ou une dureté de magnésium dans la plage allant de 5 à 30, de préférence dans la plage allant de 8 à 25 et de manière particulièrement préférée dans la plage allant de 10 à 20 °dH, déterminée dans chaque cas conformément à DIN 38409-7:2005-12.

11. Boisson édulcorée selon l'une quelconque des revendications précédentes, contenant 250 à 500 mg/l, de préférence 300 à 450 mg/l et de manière particulièrement préférée 320 à 420 mg/l de MgSO₄, 300 à 750 mg/l, de préférence 350 à 600 mg/l et de manière particulièrement préférée 400 à 550 mg/l de CaCl₂, 150 à 600 mg/l, de préférence 200 à 500 mg/l et de manière particulièrement préférée 275 à 400 mg/l de Na₂SO₄, et/ou 600 à 1 500 mg/l, de préférence 700 à 1 400 mg/l et de manière particulièrement préférée 800 à 1 100 mg/l de NaHCO₃.

12. Boisson édulcorée selon l'une quelconque des revendications précédentes, contenant 100 à 500 mg/l, de préférence 150 à 400 mg/l et de manière particulièrement préférée 200 à 300 mg/l de citrate de magnésium et/ou 200 à 1 000 mg/l, de préférence 250 à 800 mg/l et de manière particulièrement préférée 300 à 650 mg/l de citrate de sodium.

13. Boisson édulcorée selon l'une quelconque des revendications précédentes, **caractérisée en ce que**
la teneur en minéraux de l'eau riche en minéraux, calculée en tant que résidu solide, est supérieure à 1 000 mg/l, de préférence supérieure à 1 500 mg/l.

14. Boisson édulcorée selon l'une quelconque des revendications précédentes, contenant au maximum 7,0% en poids, de préférence au maximum 6,0% en poids et de manière particulièrement préférée au maximum 5,5% en poids de l'édulcorant naturel, contenant ou consistant en du saccharose.

15. Boisson édulcorée selon l'une quelconque des revendications précédentes, contenant au maximum 100 g/l de saccharose, de préférence dans la plage allant de 45 à 70 g/l de saccharose et de manière particulièrement préférée dans la plage allant de 50 à 60 g/l de saccharose, en particulier en tant que seul édulcorant naturel.

16. Boisson édulcorée selon l'une quelconque des revendications précédentes, **caractérisée en ce que**
les édulcorants naturels, en plus du saccharose, comprennent en outre des monosaccharides, sélectionnés parmi le groupe se composant de fructose, glucose, arabinose, mannose, rhamnose, xylose, tagatose, galactose et de mélanges de ceux-ci, des dissaccharides, sélectionnés parmi le groupe se composant de tréhalose, lactose, maltose et de mélanges de ceux-ci, des alcools de sucre au goût sucré, en particulier sélectionnés parmi le groupe les composant d' érythritol, glycérol, mannitol, sorbitol, xylitol et de mélanges de ceux-ci, et/ou des glycosides de stéviol, sélectionnés parmi le groupe se composant des rébaudiosides, stéviosides, stéviolbiosides, rubusosides, dulcosides, glycosides de stéviol modifiés enzymatiquement et de mélanges de ceux-ci.

17. Boisson édulcorée selon l'une quelconque des revendications précédentes, comprenant en outre au moins un édulcorant artificiel, en particulier sélectionné parmi le groupe se composant d'aspartame, sucralose, néotame, alitame, glucine, acésulfame de potassium, cyclamate, saccharine, néohespéridine dihydrochalcone et de mélanges de ceux-ci, et/ou comprenant en outre de la taurine et/ou de la caféine, et/ou comprenant en outre de la thaumatine, de la phlorétine, de la trilobatine, de la monatine et/ou de l'hespérétine.

18. Boisson édulcorée selon l'une quelconque des revendications précédentes, **caractérisée en ce que**
celle-ci est une boisson non alcoolisée, en particulier gazeuse, en particulier au goût de cola ou de fruits, une boisson énergétique ou une limonade.

19. Utilisation d'une eau riche en minéraux selon l'une quelconque des revendications précédentes dans la préparation de boissons édulcorées pour renforcer l'impression sensorielle sucrée ou pour renforcer le pouvoir sucrant d'édulcorants naturels comprenant ou consistant en du saccharose et/ou pour renforcer la rondeur, en particulier pour renforcer le pouvoir sucrant, dans des boissons édulcorées avec ces édulcorants naturels.

20. Utilisation, en particulier selon la revendication 19, d'une eau riche en minéraux selon l'une quelconque des revendications 1 à 18 pour la préparation de boissons édulcorées avec des édulcorants naturels contenant ou consistant en du saccharose, en particulier de limonades, à teneur réduite en sucre.

21. Utilisation selon la revendication 19 ou 20, **caractérisée en ce que** les boissons édulcorées à teneur réduite en édulcorants naturels, contenant ou consistant en du saccharose, ont un degré de sucrosité qui est comparable au degré de sucrosité de boissons édulcorées avec ces édulcorants naturels, contenant ou consistant en du saccharose, préparées avec une eau qui n'est pas une eau riche en minéraux, de préférence une eau ayant une dureté totale °dH d'au maximum 10, de préférence de moins de 8,4 et de manière particulièrement préférée de 7,3 au maximum, déterminée dans chaque cas conformément à la loi sur les détergents et les produits de nettoyage de la République fédérale d'Allemagne, dans la version entrée en vigueur le 5 mai 2007, l'indication de millimoles de carbonate de calcium par litre prévue par la loi devant être remplacée par l'indication de millimoles de cations de métaux alcalino-terreux par litre.

22. Utilisation, en particulier selon l'une quelconque des revendications 19 à 21, d'une eau riche en minéraux selon l'une quelconque des revendications 1 à 18 pour réduire la teneur en édulcorants naturels, comprenant ou consistant en du saccharose, dans des boissons édulcorées, en particulier sans produire une réduction du degré de sucrosité.
